# EUROPEAN PATENT APPLICATION

(11) **EP 4 040 314 A1**
(43) Date of publication of application: **10.08.2022**
(21) Application number: 21202655.3
(22) Date of filing: 14.10.2021
(51) Int. Cl.: G06F 17/16, G06N 3/063

(54) **A METHOD AND APPARATUS OF OPERATING A NEURAL NETWORK**

(30) Priority: 05.02.2021 KR 20210016943; 19.03.2021 KR 20210036060
(71) Applicant: Samsung Electronics Co., Ltd., Suwon-si, Gyeonggi-do 16677 (KR)
(72) Inventor: Yu, Hyeongseok, Suwon-si, Gyeonggi-do 16678 (KR); Kim, Yoojin, Suwon-si, Gyeonggi-do 16678 (KR); Park, Seongwook, Suwon-si, Gyeonggi-do 16678 (KR); Park, Hyun Sun, Suwon-si, Gyeonggi-do 16678 (KR); Lee, Sehwan, Suwon-si, Gyeonggi-do 16678 (KR); Jang, Jun-Woo, Suwon-si, Gyeonggi-do 16678 (KR); Joo, Deokjin, Suwon-si, Gyeonggi-do 16678 (KR)
(74) Representative: Grünecker Patent- und Rechtsanwälte PartG mbB

(57) **Abstract**

Disclosed is a method and apparatus of operating a neural network. The neural network operation method includes receiving data for the neural network operation, verifying whether competition occurs between a first data traversal path corresponding to a first operation device and a second data traversal path corresponding to a second operation device, determining first operand data and second operand data from among the data using a result of the verifying and a priority between the first data traversal path and the second data traversal path, and performing the neural network operation based on the first operand data and the second operand data.

## Description

### BACKGROUND

### Field

The following description relates to a neural network operation method and apparatus.

### 2. Description of Related Art

A neural network or an artificial neural network (ANN) may generate mapping between input patterns and output patterns, and may have a capability to generate a relatively correct output with respect to an input pattern that has not been used for training. A neural processor is designed to accelerate an operation of the neural network. Accelerating the neural network operation may involve reducing the time to obtain an output by minimizing the number of multiplication operations, which is the core of a neural operation.

For an efficient neural network operation, various techniques such as pruning and quantization have been used.

Pruning is a method of compression that involves removing nodes, weights, and connections that are elements of a neural network. Pruning aims to maintain accuracy of the neural network while increasing its efficiency.

Pruning and quantization utilize a sparsity to efficiently perform a neural network operation. However, when a sparsity is utilized, a load imbalance may occur between operation devices. That is, as elements supposed to be excluded from an arranged set of operations concentrate on a specific device, non-uniform loads are applied to all devices, which may lead to a decrease in performance.

The utilization of sparsity brings an advantage to operation acceleration. However, the conventional arts require network pruning. Fine pruning requires a unique pruning process that is utilizable by a predetermined processor, and coarse pruning may not provide an acceleration effect and thus, its use may be limited. Further, since the utilization of sparsity is limited to weight portions, it is not applicable to both weights and inputs and thus, may not be used for general purposes.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a method of operating a neural network operation, the method including receiving data for the neural network operation, verifying whether competition occurs between a first data traversal path corresponding to a first operation device and a second data traversal path corresponding to a second operation device, determining first operand data and second operand data from among the data using a result of the verifying and a priority between the first data traversal path and the second data traversal path, and performing the neural network operation based on the first operand data and the second operand data. This has the advantage that a load imbalance between operation devices may be prevented and performance may be increased.

The method may include determining whether to skip an operation for data on the first data traversal path and the second data traversal path from among the data.

The determining of whether to skip the operation may include determining to skip the operation for the data in response to the data being "0", or determining to skip the operation for the data in response to the data being a value within a range.

The verifying may include verifying that competition occurs between the first data traversal path and the second data traversal path in response to the first operation device and the second operation device approaching a same data at a point in time.

The determining of the first operand data and the second operand data may include setting a priority for the first data traversal path and the second data traversal path, and determining the first operand data and the second operand data based on the priority, in response to the occurrence of competition.

The setting may include setting a first priority such that nodes corresponding to data on the first data traversal path have different priorities, and setting a second priority such that nodes corresponding to data on the second data traversal path have different priorities.

The determining of the first operand data and the second operand data may include comparing a first priority corresponding to the first data traversal path with a second priority corresponding to the second data traversal path to determine a higher-priority traversal path, and determining data at a position at which the competition occurs to be operand data of an operation device corresponding to the higher-priority traversal path.

The determining of the data at the position at which the competition occurs may include determining the data at the position at which the competition occurs to be the first operand data, in response to the first priority being higher than the second priority, and determining subsequent data on the second data traversal path to be the second operand data.

The method may include excluding addresses of the first operand data and the second operand data from the first data traversal path and the second data traversal path, in response to the first operand data and the second operand data being determined.

The first data traversal path and the second data traversal path may a predetermined traversal range, and the neural network operation method may include updating the first data traversal path and the second data traversal path, in response to completing a traversal in the predetermined traversal range.

In another general aspect, there is provided a neural network operation apparatus, including a receiver configured to receive data for a neural network operation, and a processor configured to verify whether competition occurs between a first data traversal path corresponding to a first operation device and a second data traversal path corresponding to a second operation device, to determine first operand data and second operand data from among the data using a result of the verifying and a priority between the first data traversal path and the second data traversal path, and to perform the neural network operation based on the first operand data and the second operand data.

The processor may be configured to determine whether to skip an operation for data on the first data traversal path and the second data traversal path from among the data.

The processor may be configured to determine to skip the operation for the data in response to the data being "0", or to determine to skip the operation for the data in response to the data being a value within a range.

The processor may be configured to verify that competition occurs between the first data traversal path and the second data traversal path, in response to the first operation device and the second operation device approaching a same data at a point in time.

The processor may be configured to set a priority for the first data traversal path and the second data traversal path, and to determine the first operand data and the second operand data based on the priority in response to the occurrence of competition.

The processor may be configured to set a first priority such that nodes corresponding to data on the first data traversal path have different priorities, and set a second priority such that nodes corresponding to data on the second data traversal path have different priorities.

The processor may be configured to compare a first priority corresponding to the first data traversal path with a second priority corresponding to the second data traversal path to determine a higher-priority traversal path, and to determine data at a position at which the competition occurs to be operand data of an operation device corresponding to the higher-priority traversal path.

The processor may be configured to determine the data at the position at which the competition occurs to be the first operand data, in response to the first priority being higher than the second priority, and to determine subsequent data on the second data traversal path to be the second operand data.

The processor may be configured to exclude addresses of the first operand data and the second operand data from the first data traversal path and the second data traversal path, in response to the first operand data and the second operand data being determined.

The first data traversal path and the second data traversal path may have a predetermined traversal range, and the processor may be configured to update the first data traversal path and the second data traversal path, in response to completing a traversal in the predetermined traversal range.

Other features and aspects will be apparent from the following detailed description, the drawings, and the claims.

### BRIEF DESCRIPTION OF THE DRAWINGS

FIG. 1 illustrates an example of a neural network operation apparatus.
FIG. 2 illustrates an example of implementation of the neural network operation apparatus of FIG. 1.
FIG. 3 illustrates an example of a data traversal process of the neural network operation apparatus of FIG. 1.
FIG. 4 illustrates an example of skipping data.
FIG. 5 illustrates an example of traversing data in operation devices.
FIG. 6 illustrates an example of a data traversal path.
FIGS. 7A to 7C illustrate an example of a data traversal process over time.
FIG. 8 illustrates an example of a data traversal path.
FIG. 9 illustrates an example of performing a neural network operation while performing a data traversal.
FIG. 10 illustrates an example of implementation of the neural network operation apparatus of FIG. 1.
FIG. 11 illustrates an example of an operation of the neural network operation apparatus of FIG. 1.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms of first, second, A, B, (a), (b), may be used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween. Likewise, expressions, for example, "between" and "immediately between" and "adjacent to" and "immediately adjacent to" may also be construed as described in the foregoing.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

When describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

The use of the term "may" herein with respect to an example or embodiment (e.g., as to what an example or embodiment may include or implement) means that at least one example or embodiment exists where such a feature is included or implemented, while all examples are not limited thereto.

Hereinafter, example embodiments will be described in detail with reference to the accompanying drawings. When describing the example embodiments with reference to the accompanying drawings, like reference numerals refer to like components and a repeated description related thereto will be omitted.

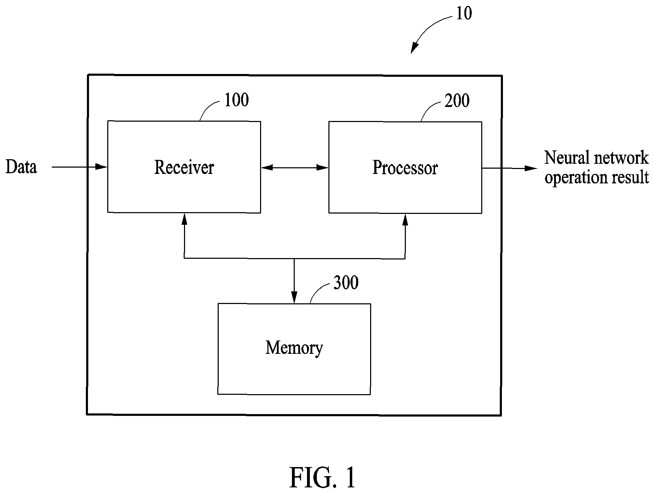

FIG. 1 illustrates an example of a neural network operation apparatus.

Referring to FIG. 1, a neural network operation apparatus 10 may generate a result of a neural network operation by processing data. The neural network operation apparatus 10 may perform a neural network operation by traversing data based on a sparsity of data, thereby accelerating the neural network operation. The sparsity may be a ratio of insignificant elements in a neural network operation among elements used for the operation. For example, the sparsity may be a ratio of elements having a zero value to all the elements.

The neural network operation apparatus 10 may skip data not requiring an operation in the data traversal process and process competition occurring in the data traversal process based on a priority, thereby efficiently reducing a cost of computation.

The neural network operation apparatus 10 may train a neural network. The neural network operation apparatus 10 may perform inference based on the trained neural network.

The neural network operation apparatus 10 may perform a neural network operation using an accelerator. The neural network operation apparatus 10 may be implemented inside or outside the accelerator.

The accelerator may include, for example, a microprocessor, single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a microcomputer, a processor core, a multi-core processor, and a multiprocessor, a central processing unit (CPU), a controller and an arithmetic logic unit (ALU), a digital signal processor (DSP), a graphics processing unit (GPU), a field-programmable gate array (FPGA), an application-specific integrated circuit (ASIC), or an application processor (AP), a neural processing unit (NPU), or a programmable logic unit (PLU). In another example, the accelerator may be implemented as a software computing environment, such as a virtual machine.

The neural network (or an artificial neural network) may include a statistical training algorithm that simulates biological neurons in machine learning and cognitive science. The neural network may refer to a general model that has the ability to solve a problem, where artificial neurons (nodes) forming the network through synaptic combinations change a connection strength of synapses through training.

The neurons of the neural network may include a combination of weights or biases. The neural network may include one or more layers each including one or more neurons or nodes. The neural network may infer a desired result from an input by changing the weights of the neurons through learning.

The neural network may include a deep neural network (DNN). The neural network may include any one or any combination of a convolutional neural network (CNN), a recurrent neural network (RNN), a perceptron, a multiplayer perceptron, a feed forward (FF), a radial basis network (RBF), a deep feed forward (DFF), a long short-term memory (LSTM), a gated recurrent unit (GRU), an auto encoder (AE), a variational auto encoder (VAE), a denoising auto encoder (DAE), a sparse auto encoder (SAE), a Markov chain (MC), a Hopfield network (HN), a Boltzmann machine (BM), a restricted Boltzmann machine (RBM), a deep belief network (DBN), a deep convolutional network (DCN), a deconvolutional network (DN), a deep convolutional inverse graphics network (DCIGN), a generative adversarial network (GAN), a liquid state machine (LSM), an extreme learning machine (ELM), an echo state network (ESN), a deep residual network (DRN), a differentiable neural computer (DNC), a neural turning machine (NTM), a capsule network (CN), a Kohonen network (KN), and an attention network (AN). In an example, at least a portion of the plurality of layers in the neural network may correspond to the CNN, and another portion thereof may correspond to the FCN. In this case, the CNN may be referred to as convolutional layers, and the FCN may be referred to as fully connected layers.

The neural network operation apparatus 10 may be implemented by a printed circuit board (PCB) such as a motherboard, an integrated circuit (IC), or a system on a chip (SoC). For example, the neural network operation apparatus 10 may be implemented by an application processor.

In addition, the neural network operation apparatus 10 may be implemented in a personal computer (PC), a data server, or a portable device.

The portable device may be implemented as a laptop computer, a mobile phone, a smart phone, a tablet PC, a mobile internet device (MID), a personal digital assistant (PDA), an enterprise digital assistant (EDA), a digital still camera, a digital video camera, a portable multimedia player (PMP), a personal navigation device or portable navigation device (PND), a handheld game console, an e-book, a digital television (DTV), an artificial intelligence (Al) speaker, a home appliance such as a television, a smart television, a refrigerator, a smart home device, a vehicle such as a smart vehicle, an Internet of Things (loT) device, or a smart device. The smart device may be implemented as a smart watch, a smart band, smart glasses, or a smart ring.

The neural network operation apparatus 10 includes a receiver 100 and a processor 200. The neural network operation apparatus 10 may further include a memory 300.

The receiver 100 may include a reception interface. The receiver 100 may receive data for performing the neural network operation. The receiver 100 may receive the data from the memory 300.

The processor 200 may process data stored in the memory 300. The processor 200 may execute a computer-readable code (for example, software) stored in the memory 300 and instructions triggered by the processor 200.

The "processor 200" may be a data processing device implemented by hardware including a circuit having a physical structure to perform desired operations. For example, the desired operations may include code or instructions included in a program.

For example, the hardware-implemented data processing device may include for example, a microprocessor, a microprocessor, single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a microcomputer, a processor core, a multi-core processor, and a multiprocessor, a central processing unit (CPU), an application-specific integrated circuit (ASIC), and a field-programmable gate array (FPGA), a central processing unit (CPU), a controller and an arithmetic logic unit (ALU), a digital signal processor (DSP), a graphics processing unit (GPU), or an application processor (AP), a neural processing unit (NPU), or a programmable logic unit (PLU).

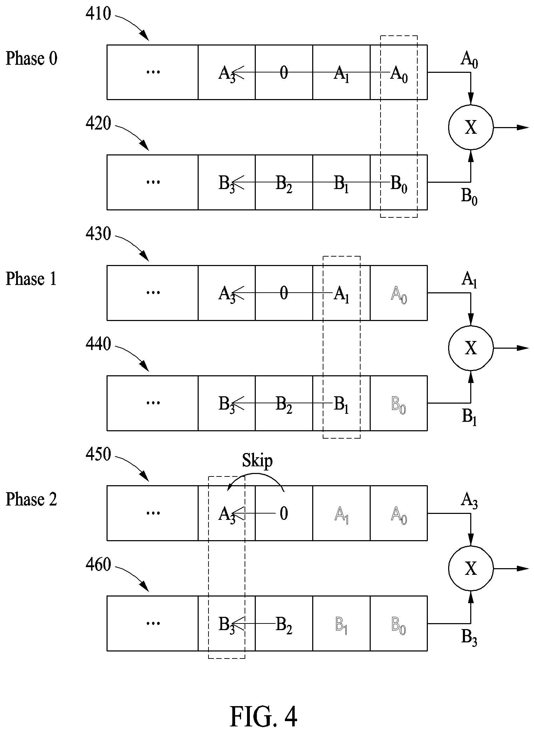

The processor 200 may determine whether to skip an operation for data on a first data traversal path and a second data traversal path among the data. The processor 200 may determine to skip the operation for the data in response to the data being "0", or determine to skip the operation for the data in response to the data being a value within a range. In an example, the range may be predetermined. Data skipping will be described in detail with reference to FIG. 4.

The processor may verify whether competition occurs between the first data traversal path corresponding to a first operation device and the second data traversal path corresponding to a second operation device. The processor 200 may verify that competition occurs between the first data traversal path and the second data traversal path in response to the first operation device and the second operation device approaching the same data at a point in time.

In an example, the processor 200 may determine first operand data and second operand data among the data using a result of the verifying and a priority between the first data traversal path and the second data traversal path.

The processor 200 may set a priority for the first data traversal path and the second data traversal path. The processor 200 may set a first priority such that nodes corresponding to data on the first data traversal path have different priorities. The processor 200 may set a second priority such that nodes corresponding to data on the second data traversal path have different priorities.

In an example, when competition occurs, the processor 200 may determine the first operand data and the second operand data based on the priority. The processor 200 may determine a higher-priority traversal path by comparing a first priority corresponding to the first data traversal path with a second priority corresponding to the second data traversal path.

The processor 200 may determine data at a position at which the competition occurs to be operand data of an operation device corresponding to the higher-priority traversal path. When the first priority is higher than the second priority, the processor 200 may determine the data at the position at which the competition occurs to be the first operand data. The processor 200 may determine subsequent data on the second data traversal path to be the second operand data.

When the first priority is lower than the second priority, the processor 200 may determine the data at the position at which the competition occurs to be the second operand data. The processor 200 may determine subsequent data on the first data traversal path to be the first operand data.

In an example, the processor 200 may exclude addresses of the first operand data and the second operand data from the first data traversal path and the second data traversal path, when the first operand data and the second operand data being determined.

The processor 200 may perform the neural network operation based on the first operand data and the second operand data.

In an example, the first data traversal path and the second data traversal path may have a traversal range. In an example, the traversal range may be predetermined. The processor 200 may update the first data traversal path and the second data traversal path for the data in response to a traversal in the traversal range being completed.

The memory 300 stores instructions (or programs) executable by the processor 200. For example, the instructions may include instructions to perform an operation of the processor and/or an operation of each element of the processor.

The memory 300 is implemented as a volatile memory device or a non-volatile memory device.

The volatile memory device may be implemented as a dynamic random access memory (DRAM), a static random access memory (SRAM), a thyristor RAM (T-RAM), a zero capacitor RAM (Z-RAM), or a twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM(CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device), or an insulator resistance change memory.

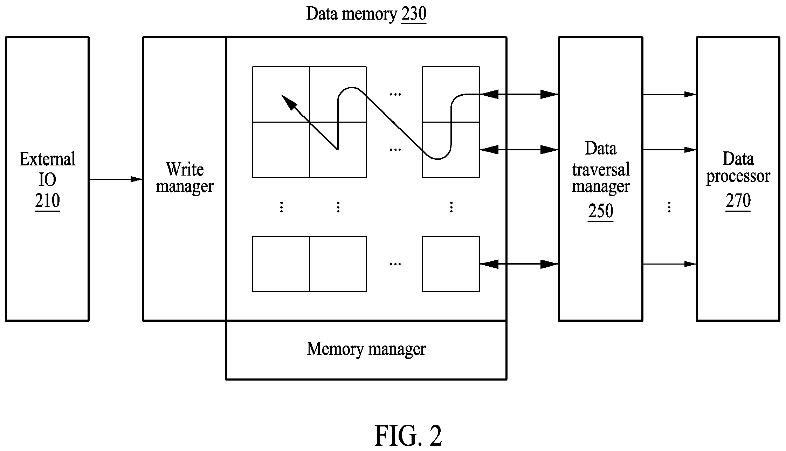

FIG. 2 illustrates an example of the neural network operation apparatus of FIG. 1.

Referring to FIG. 2, an apparatus for operating a neural network (for example, the neural network operation apparatus 10 of FIG. 1) may load data from a memory (for example, the memory 300 of FIG. 1) storing the data and assign the data to an operation device, where a neural network operation is to be performed on the data using a hardware accelerator or a processor, such as, for example, the processor 200 of FIG. 1. The apparatus for operating the neural network may include an operation device (for example, processing unit) and a memory system including a central processing unit (CPU), a digital signal processor (DSP), a graphics processing unit (GPU), and a neural processing unit (NPU). The operation device may include a multiplier, an adder, or a multiply-accumulator (MAC).

The processor 200 may accelerate the neural network operation using a sparsity of data used in the neural network operation. The processor 200 may provide a scheme of traversing data of an arbitrary set during a drive time and obtaining data to be used by respective operation devices.

In an example, the processor 200 may skip data based on a skip condition and perform a neural network operation without loading redundant data among the operation devices, according to conditions for the operation devices. In an example, the data that is skipped may be predetermined.

The processor 200 may skip an operation by skipping the data using the sparsity of data and selecting multiple operand data within a designated range, thereby improving the performance of the neural network operation and reducing the computation cost.

Obtaining operand data to be input to an operation device may refer to obtaining an authority of an operation device to exclusively use a candidate from among candidates of data sharable between neural network operations.

Skipping the data may refer to supplying only data satisfying a condition such as a predetermined range (or threshold) to an operation device and excluding data not satisfying the condition from an operation. For example, in the case of a pruning network, the processor 200 may accelerate a neural network operation for input data without compression or structurization.

The neural network operation apparatus 10 may include an external input/output (IO) 210, a data memory 230, a data traversal manager 250, and a data processor 270 (for example, operation device).

The external IO 210 may include a data input/output interface. The data memory 230 may be included in the memory 300. The data traversal manager 250 may be included in the processor 200. The data processor 270 may be positioned separately outside the neural network operation apparatus.

The data traversal manager 250 may update and manage an address of the memory 300 that is limited in size, at which data are stored. The data traversal manager 250 may traverse data using a data traversal path and output operand data obtained through the traversal to the data processor 270.

The data memory 230 may also store indices for determining a data skip condition and whether to use data (for example, whether to use data in a neural network operation).

The data traversal manager 250 may perform an address update for a region where data use is completed when data transmission is completed in a phase or cycle in the flow of time. For example, the data traversal manager 250 may exclude an address of operand data of the data processor 270 from a data traversal path in response to the operand data being determined.

The data traversal manager 250 may traverse data along the data traversal path and determine operand data, thereby transmitting the operand data, the order of obtaining data, and metadata on the position of the data together to the data processor 270.

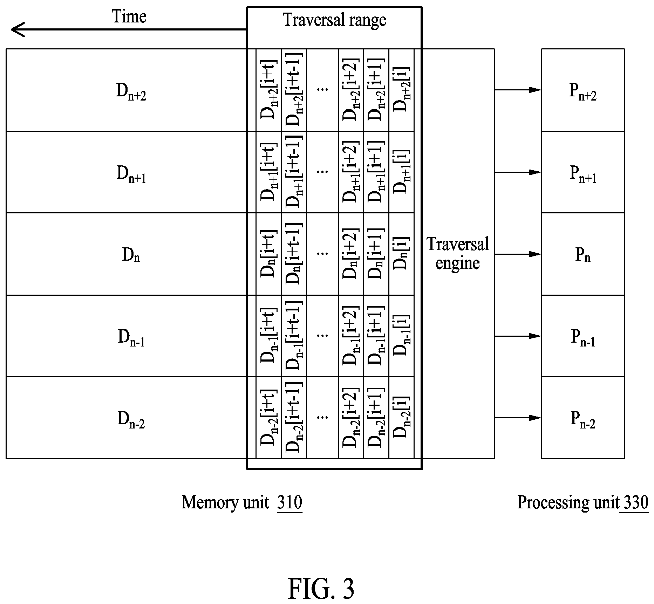

FIG. 3 illustrates an example of a data traversal process of the neural network operation apparatus of FIG. 1.

Referring to FIG. 3, a memory (for example, the memory 300 of FIG. 1) may include a memory unit 310. A processor (for example, the processor 200 of FIG. 1) may include operation devices (for example, processing units 330). In an example, the operation device may be implemented separately outside the processor 200.

The processor 200 may perform load balancing, thereby reducing the time to process a neural network operation and the energy used by hardware.

Load balancing may refer to the process of distributing data *D*ₙ to be used by processing units 330 (for example, operation devices) so as to be used by one of the processing units (*Pₙ₋₃, Pₙ₋₂, Pₙ₋₁, Pₙ, P*_{*n*+}*₁, P*_{*n*+}*₂, P*_{*n*+}*₃,* ...). In an example, data of the data *D*ₙ may be exclusively used only by one of the processing units 330.

The processor 200 may efficiently solve the competition issue occurring in the process of retrieving the same data by the processing units 330 during the load balancing process, thereby performing a neural network operation without decreasing the performance according to competition elimination in hardware.

The memory unit 310 may be assigned data *D*ₙ to be processed by a processing unit *P*ₙ. The processing unit *P*ₙ may be one processing unit in a set of m processing units *P*={*P*_{*n*+}*ₐ, P*_{*n*+}*_{b}, P*_{*n*+}*_{c}, P*_{*n*+}*_{d},* ...}. Different processing units may access a portion or an entirety of a set of m pieces of data *D*={*D*_{*n*+}*ₐ, D*_{*n*+}*_{b}, D*_{*n*+}*_{c}, D*_{*n*+}*_{d},* ...}, search for data satisfying a condition, and load the data that is found.

If a set of L pieces of data, which is a subset of D to be accessed by the processing unit *Pₙ* in the set, is *Dₙ'*={*D_{n,}' D*_{*n*+}*ₐ, D*_{*n*+}*_{b}, D*_{*n*+}*_{c}, D*_{*n*+}*_{d},* ...}, a data set to be accessed by another processing unit *P*_{*n*+*i*} may be *D*_{*n*+}*ᵢ'*={*D*_{*n*+}*ᵢ, D*_{*n*+*i*+}*ₐ, D*_{*n*+*i*+}*_{b}, D*_{*n*+*i*+}*_{c}, D*_{*n*+*i*+}*_{d},* ...}. Here, the access order of a, *b,* c, and *d* may be the same for all processing units.

The processing unit *P*ₙ may traverse data m times in the range of *Dₙ'[k:k*+*t-1]*={*Dₙ[k:k*+*t-1*]*, Dₙ₊ₐ[k:k*+*t-1], D*_{*n*+}*_{b}[k:k*+*t-1], Dₙ*+*_{c}[k:k*+*t-1], D*_{*n*+}*_{d}[k:k*+*t-1],* ...} for each of the data in the data set *Dₙ' in* a phase or cycle. Here, *m* may not exceed *l*t,* and each *Dₙ'[i]* may be traversed only one time in a single phase or cycle.

According to the above condition, the processing unit *P*ₙ may traverse the data set *Dₙ'* in the following order m times. The processing unit *P*ₙ may access data in a manner of *[D*_{*n*+}*_{d}[q]* → *D*_{*n*+}*ₑ[r]* → *D_{n+f}[s],* ...], and another processing unit *P*_{*n*+*i*} may access data in a manner of [*D*_{*n*+*d*+}*ᵢ[q]* → *D*_{*n*+*e*+}*ᵢ [r]* → *D*_{*n*+*f*+}*ᵢ [s],* ...].

In the above example, *P*ₙ may perform at least one traversal on *Dₙ'[k:k*+*t-1]*={*Dₙ[k:k*+*t-1], D*_{*n*+}*ₐ[k:k*+*t-1], D*_{*n*+}*_{b}[k:k*+*t-1], D*_{*n*+}*_{c}[k:k*+*t-1], D*_{*n*+}*_{d}[k:k*+*t-1],* ...} assigned thereto for the data *Dₙ'.*

In the traversal process described above, a processing unit retrieving data in consideration of the skip condition may transfer the data as its own input and set the data as an in-use state to exclude the data such that the data may not be used by another processing unit. The processing unit obtaining data for its input may be changed to a traversal-ended state.

When data do not satisfy an operation condition because multiple processing units 330 access the same data *Dₚ[j]* in a phase or cycle or are not used by another processing unit, the processing units 330 may compete for using the data.

The processor 200 may set a unique priority for the order to access data to solve the competition. For example, the processor 200 may set the priority for *Pₙ*, like *D*_{*n*+}*_{d}[q]*=1*, D*_{*n*+}*ₑ[r]*=2*, D_{n+f}[s]*=3*,* .... In the same manner, the processor 200 may set the priority for *P*_{*n*+*i*}, like *D*_{*n*+*d*+}*ᵢ[q]*=1 *, D*_{*n*+*e*+}*ᵢ [r]*=2*, D*_{*n*+*f*+}*ᵢ [s]*=3, ....

In the above example, the priority may be assigned for the data access order of each processing unit in the same manner, and different priorities may be assigned for all the access orders. The processor 200 may set the priority regardless of the data access order. That is, the processor 200 may set a highest priority to data to be accessed first and set a lowest priority to data to be access last, or set the priorities in the reverse order.

When competition occurs, the processor 200 may compare the priorities set for respective data traversal paths and allow a processing unit having a higher priority to obtain the data. In an example, the processing unit obtaining the data may terminate the traversal, and a processing unit failing to obtain data may continue traversing data along the traversal path designated above.

Finally, the processing unit failing to obtain data may perform a null operation or generate an invalid result. For example, if the processing unit is a MAC, the processing unit may generate "0".

In *Dₙ[k:k*+*t-1]* in each phase or cycle, if all data correspond to the skip condition or include used *Dₙ[y],* it may be excluded from *Dₙ[k:k*+*t-1],* and k and *t* may be updated, and then each processing unit may iterate a traversal.

FIG. 4 illustrates an example of skipping data.

Referring to FIG. 4, a processor (for example, the processor 200 of FIG. 1) may determine whether to skip an operation for data on a first data traversal path and a second data traversal path among data.

The processor 200 may determine to skip the operation for the data in response to the data being "0", or determine to skip the operation for the data in response to the data being a value within a range.

The example of FIG. 4 shows a case of skipping an operation when data are "0". However, in some examples, the operation may be skipped for data other than "0". For two inputs *Aₙ* and *Bₙ* of an operation device (for example, multiplier), A and B may denote the two inputs of the operation device, and *n* may denote an operation order.

Phase 0, Phase 1, and Phase 2 may denote points in time of data traversal. The processor 200 may traverse data in data sets from right to left.

In Phase 0, the processor 200 may perform a neural network operation (for example, multiplication) using *A₀* and B*₀* that are data at the first positions in a data set 410 and a data set 420.

In Phase 1, the processor 200 may perform a neural network operation using *A₁* in a data set 430 and *B₁* in a data set 440.

In Phase 2, the processor 200 may determine to skip data at a position corresponding to *A₂* in a data set 450 since the data at the position corresponding to *A₂* are "0". In this example, the processor 200 may also skip data *B₂* in a data set 460 so as to correspond to the skipping performed for the data set 450. In other words, when skipping data is performed, a hopping offset for data traversal corresponding to skipping data may be the same for data used in the same operation device.

In the example of FIG. 4, when skipping is not performed, a total of four multiplications needs to be performed. However, the processor 200 may perform the operation within three phases (or cycles) by skipping some data, thereby reducing a quarter of the operation time and energy.

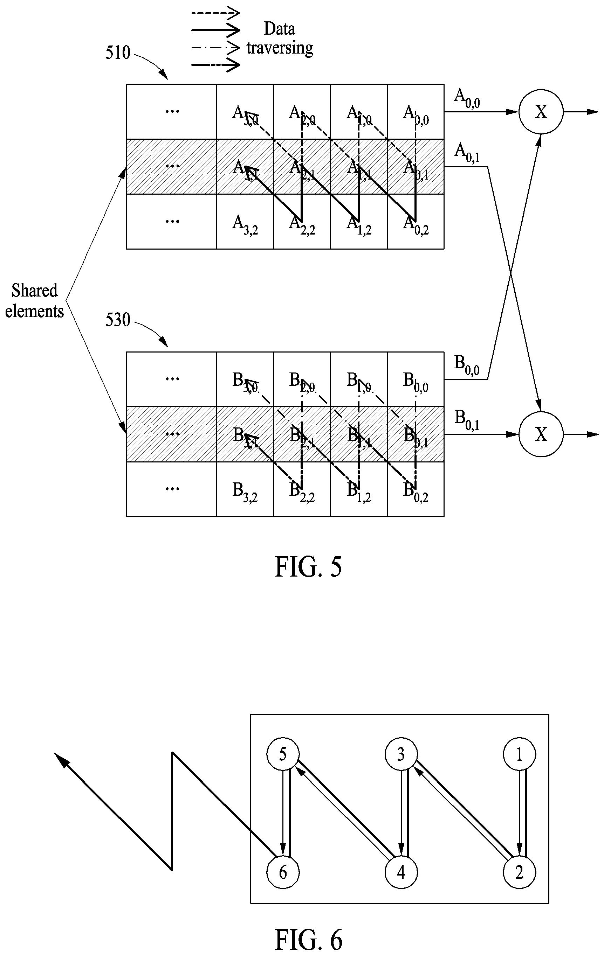

FIG. 5 illustrates an example of traversing data in operation devices, and FIG. 6 illustrates an example of a data traversal path.

Referring to FIGS. 5 and 6, a processor (for example, the processor 100 of FIG. 1) may traverse data stored in a memory (for example, the memory 300 of FIG. 1) based on a data traversal path. The processor 200 may determine operand data to be output to an operation device (for example, multiplier) while performing traversal along the data traversal path, and transmit the determined operand data to the operation device.

The data traversal path may include nodes corresponding to positions at which data are stored in the memory 300, and an edge connecting the nodes. In the example of FIG. 5, broken lines or solid lines in a data set 510 and a data set 530 may indicate examples of data traversal paths. A data traversal path may have a data traversing direction.

The processor 200 may generate a data traversal path based on a data traversal range. The traversal range may indicate the number of data to be traversed. For example, the processor 200 may have a data traversal path of "7" in the example of FIG. 5, and a data traversal range in the traversal path of FIG. 6 may be "6".

To perform an operation in a first operation device (for example, multiplier), the processor 200 may traverse data in the data set 510 in an order of *A_{0,0}, A_{0,1}, A_{1,0}, A_{1,1}, A_{2,0}, A₂,₁,* and *A_{3,0},* and traverse data in the data set 530 in an order of *B_{0,0}, B_{0,1}, B_{1,0}, B_{1,1}, B_{2,0}, B*_{*2*,*1*}, and *B₃,₀.*

In the same manner, to perform an operation in a second operation device (for example, multiplier), the processor 200 may traverse data in the data set 510 in an order of *A_{0,1}, A_{0,2}, A_{1,1}, A_{1,2}, A_{2,1}, A_{2,2},* and *A_{3,1},* and traverse data in the data set 530 in an order of *B_{0,1}, B_{0,2}, B_{1,1}, B_{1,2}, B_{2,1}, B_{2,2}*, and *B_{3,10}.*

The processor 200 may allow all operation devices participating in data traversal to simultaneously perform traversal during a drive time, without increasing a traversal time of an operation device traversing data at the same time of data traversal, thereby solving an issue in limiting the number of operation devices or limiting the performance thereof.

The processor 200 may assign different priorities for a traversal path, thereby solving competition for a data call occurring when multiple operation devices perform operations.

The processor 200 may generate a data traversal path according to the order of traversing data by each operation device for a designated region of the memory 300. The processor 200 may set positions at which data are stored as nodes and connect the nodes using an edge, thereby setting a data traversal path from a start node to a last node. In this example, the data traversal path may have a directivity.

The processor 200 may generate the data traversal path so that the edges and nodes on the data traversal path do not overlap. The processor 200 may set priorities for the nodes on the data traversal path.

The processor 200 may set a priority for the first data traversal path and the second data traversal path. The processor 200 may set a first priority such that nodes corresponding to data on the first data traversal path have different priorities. The processor 200 may set a second priority such that nodes corresponding to data on the second data traversal path have different priorities.

For example, in the example of FIG. 6, the processor 200 may set "1" as a number corresponding to priority for a node on the upper right side, set "2" as a number corresponding to priority for a node on the lower right side, and set "3" as a number corresponding to priority for a node on the upper center side. In the same manner, the processor 200 may set priorities for six nodes.

The processor 200 may determine a node corresponding to a relatively small number to be a node having a relatively high priority. In another example, the processor 200 may determine a node corresponding to a relatively great number to be a node having a relatively low priority.

The processor 200 may determine the first operand data and the second operand data based on the priority when competition occurs. The processor 200 may determine a higher-priority traversal path by comparing a first priority corresponding to the first data traversal path with a second priority corresponding to the second data traversal path.

The processor 200 may determine data at a position at which the competition occurs to be operand data of an operation device corresponding to the higher-priority traversal path. When the first priority is higher than the second priority, the processor 200 may determine the data at the position at which the competition occurs to be the first operand data. The processor 200 may determine subsequent data on the second data traversal path to be the second operand data.

When the first priority is lower than the second priority, the processor 200 may determine the data at the position at which the competition occurs to be the second operand data. The processor 200 may determine subsequent data on the first data traversal path to be the first operand data.

As described above, in the example of FIG. 6, the data traversal range (or traversal for valid data) is limited to up to six times, and the processor 200 may set a priority for a memory position on each data traversal path according to a traversal length.

The processor 200 may traverse the memory up to six times until obtainable data are found to perform a neural network operation. In an example, if an operation candidate (for example, operand data) is not determined within a limited number of times, the data traversal may be terminated, and a predetermined value may be transmitted to the operation device.

In an example, the processor 200 may traverse a data traversal path of a predetermined and limited length according to a directivity, starting from a start point at which stored data are updated or an address in the memory 300. In an example, the directivity may be predetermined.

Nodes on the data traversal path may have different priorities within the data traversal path. The processor 200 may compare the priority of each data traversal path at the node where the competition occurs when performing the traversal along the data traversal paths corresponding to the operation devices for transmission to different operation devices.

The processor 200 may transmit data at the node where the competition occurs, as the operand data, to an operation device corresponding to a data traversal path having a higher priority. A data traversal path that fails to obtain data may have survivability, and the processor 200 may continue the traversal within a preset traversal range using the data traversal path on which it fails to obtain data.

The examples of FIGS. 5 and 6 show the data traversal paths set in a toothed shape. However, the shape of the data traversal path may differ depending on an example.

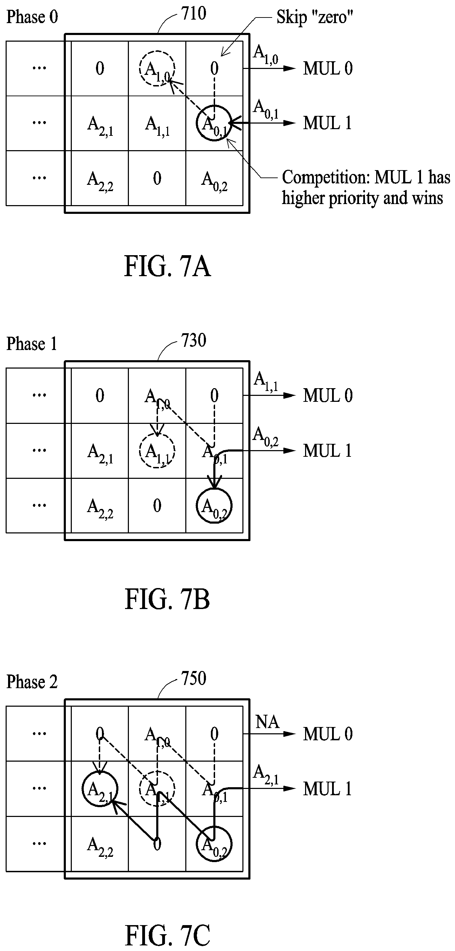

FIGS. 7A to 7C illustrate an example of a data traversal process over time.

Referring to FIGS. 7A to 7C, the processor 200 may determine operand data to be used for a neural network operation along data traversal paths (for example, a first data traversal path and a second data traversal path) corresponding to operation devices (for example, a first operation device and a second operation device).

In the example of FIGS. 7A to 7C, the processor 200 may determine first operand data to be used by the first operation device and second operand data to be used by the second operation device while performing a data traversal along the first data traversal path corresponding to the first operation device (for example, MUL 0) and the second data traversal path corresponding to the second operation device (for example, MUL 1).

FIG. 7A shows a traversal operation in Phase 0 (or Cycle 0). The processor 200 may skip data satisfying the skip condition as described above.

The processor 200 may verify that result data obtained by traversing first data on the first data traversal path are "0" and skip the data being "0". The processor 200 attempts to determine subsequent data *A_{0,1}* on the first data traversal path to be the first operand data. However, since *A_{0,1}* is the first data on the second data traversal path, competition may occur.

That is, the first operation device skips the data being "0" and attempts to obtain the subsequent data *A_{0,1}* on the first data traversal path. However, since the second operation device also attempts to obtain the same data, competition may occur.

The processor 200 may determine the first operand data and the second operand data based on a priority when competition occurrence of. The processor 200 may determine a higher-priority traversal path by comparing a first priority corresponding to the first data traversal path with a second priority corresponding to the second data traversal path.

Priorities and numbers corresponding to the priorities may be assigned in the same manner as described with reference to FIG. 6. Therefore, in FIG. 7A, a number corresponding to a priority corresponding to data *A_{0,1}* on the first data traversal path may be "1 ", and a number corresponding to a priority corresponding to data *A_{0,1}* on the second data traversal path is "2".

If a node corresponding to a smaller value has a priority, the processor 200 may determine *A_{0,1}* to be the second operand data since the first data traversal path has a higher priority than the second operand data. Thus, the processor 200 may transmit *A_{0,1}* to the second operation device and terminate the traversal.

Since the first operation device fails to obtain the data *A_{0,1},* the processor 200 may continue the traversal along the first data traversal path. Since the subsequent data on the first data traversal path are data *A_{1,0},* the processor 200 may determine *A_{1,0}* to be the first operand data, transmit *A_{1,0}* to the first operation device, and terminate the traversal in Phase 0.

In response to operand data being determined, the processor 200 may exclude an address of data determined to be the operand data from a data traversal path. In the example of FIG. 7A, the processor 200 may indicate information that the data are already obtained, in the data *A_{0,1}* and *A_{1,0}* determined to be operand data and transmitted to the operation device, or change the data to "0", thereby excluding the data from a data traversal of a subsequent phase.

FIG. 7B shows a traversal operation in Phase 1 (or Cycle 1). In Phase 1, both subsequent data *A_{1,1}* on the first data traversal path and subsequent data *A_{0,2}* on the second data traversal path are not "0". Thus, the processor 200 may not perform skipping.

The processor 200 may perform the data traversal in a state in which the already traversed data 0, *A₀,₁,* and *A_{1,0}* are excluded from the first data traversal path and the already traversed data *A_{0,1}* is excluded from the second data traversal path.

The processor 200 may determine subsequent data *A_{1,1}* on the first data traversal path to be the first operand data and transmit the data *A_{1,1}* to the first operation device, and determine subsequent data *A_{0,2}* on the second data traversal path to be the second operand data and transmit the data *A_{0,2}* to the second operation device. Further, the data *A_{1,1}* and *A_{0,2}* transmitted to the operation devices and used for operations may be excluded from the data traversal paths.

FIG. 7C shows a traversal operation in Phase 2 (or Cycle 2). In Phase 1, subsequent data on the first data traversal path are "0". Thus, the processor 200 may skip the data being "0".

Subsequent data on the second data traversal path are *A_{1,1}* that are the data excluded from the previous phase. Thus, the processor 200 may skip *A_{1,1}*. Since data subsequent to *A_{1,1}* on the second data traversal path are "0", the processor 200 may skip the data.

In this example, subsequent data on the first data traversal path are *A_{2,1},* and subsequent data on the second data traversal path are also *A_{2,1}*. Thus, competition may occur. The processor 200 may determine an operation device to transmit *A_{2,1}* based on a priority. Numbers corresponding to priorities may be set as shown in the example of FIG. 6.

A number corresponding to a priority of *A_{2,1}* on the first data traversal path is "6", and a number corresponding to a priority of *A_{2,1}* on the second data traversal path is "5". Thus, the processor 200 may determine that the second data traversal path has a higher priority, and determine *A_{2,1}* to be second operand data.

In this example, since a predetermined traversal range for the first data traversal path ends, the processor 200 may output NA indicating no data are obtainable to the first operation device.

The processor 200 may update the first data traversal path and the second data traversal path for the data in response to a traversal in the predetermined traversal range being completed. In FIG. 7C, the processor 200 may update the first data traversal path or the second data traversal path to traverse data on a new memory area.

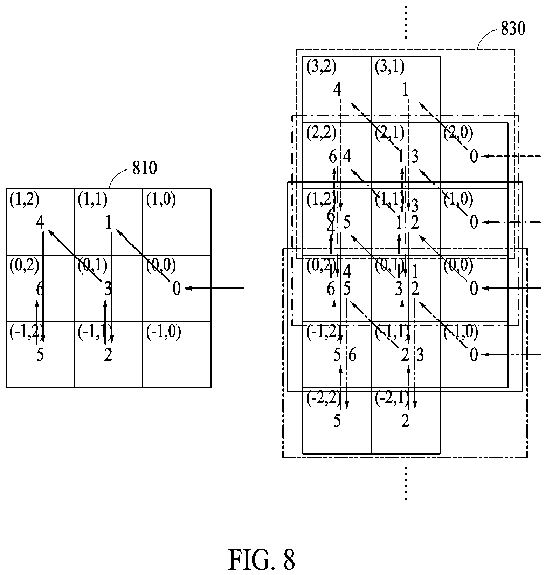

FIG. 8 illustrates an example of a data traversal path.

Referring to FIG. 8, the processor 200 may perform data traversal on data that are not arranged in a square form. Further, the processor 200 may also perform data traversals in parallel if three or more operation devices are provided.

As shown in the example of FIG. 8, even when three operation devices desire to share a single data set 830, data traversals may be performed in the manner as described with reference to FIGS. 7A to 7C. In this example, the processor 200 may traverse data using a data traversal path 810.

When competition between data traversal paths occurs or data being "0" are traversed, the processing scheme may be the same as that shown in FIGS. 7A to 7C. Through the data traversal described above, the processor 200 may reduce the power used for a neural network operation and improve the operation efficiency.

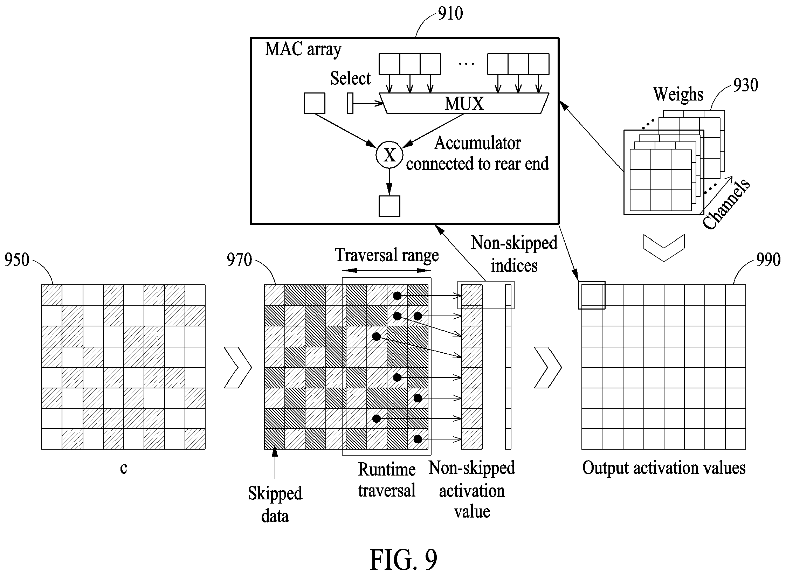

FIG. 9 illustrates an example of performing a neural network operation while performing a data traversal.

Referring to FIG. 9, the process of performing a neural network operation using a neural network operation apparatus (for example, the neural network operation apparatus 10 of FIG. 1) is shown.

A processor (for example, the processor 200 of FIG. 1) may store input data (for example, activation value) having a sparsity in a memory (for example, data buffer), traverse the stored data, transmit valid data to a MAC array 910 together with index information (for example, address of operand data in the memory), and perform a neural network operation by selecting a weight 930.

The processor 200 may determine operand data based on priorities while traversing data to be input to respective processing units in an operation device (for example, MAC array 910) along a data traversal path.

For example, a receiver (for example, the receiver 100 of FIG. 1) may receive data 950 and output the data 950 to the processor 200.

The processor 200 may traverse the received data 970. For an area corresponding to a portion of the data 970, the processor 200 may skip data of a predetermined value and perform a data traversal based on priorities of data traversal paths, in the manner described above.

The processor 200 may transmit operand data determined through the traversal to the MAC array 910, and generate an output activation value 990 based on a result of operation output from the MAC array 910.

By using the data traversal based on priorities, the processor 200 may perform a neural network operation while achieving load balancing in the operation. Through this, the processor 200 may suppress an increase in complexity according to the number of operation devices, thereby achieving a relatively high operation performance compared to the conventional scheme, when implementing actual hardware.

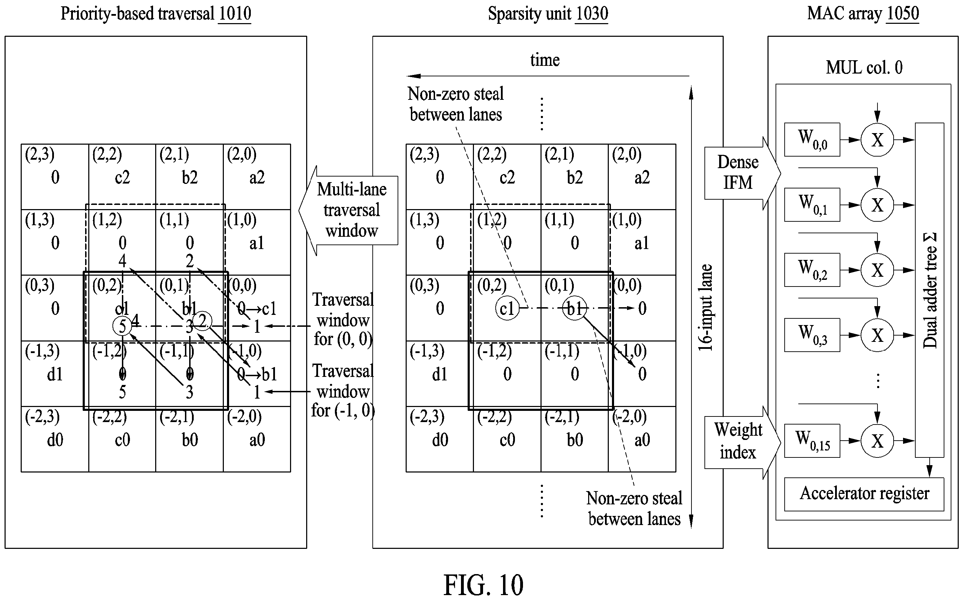

FIG. 10 illustrates an example of implementation of the neural network operation apparatus of FIG. 1.

In FIG. 10, an example of implementation of a sparsity MAC operation device to which a neural network operation apparatus (for example, the neural network operation apparatus 10 of FIG. 1) is applied is shown.

The sparsity MAC operation device may include a sparsity unit 1030 and a MAC array 1050. A processor (for example, the processor 200 of FIG. 1) may be implemented inside or outside the sparsity unit 1030.

The MAC array 1050 may be included in the operation device described above. The MAC Array (1050) may perform an operation and generate a result of the operation.

The sparsity unit 1030 may perform priority-based data traversal 1010. The sparsity unit 1030 may traverse data along a data traversal path in the same manner as described above, and transmit data to the MAC array 1050.

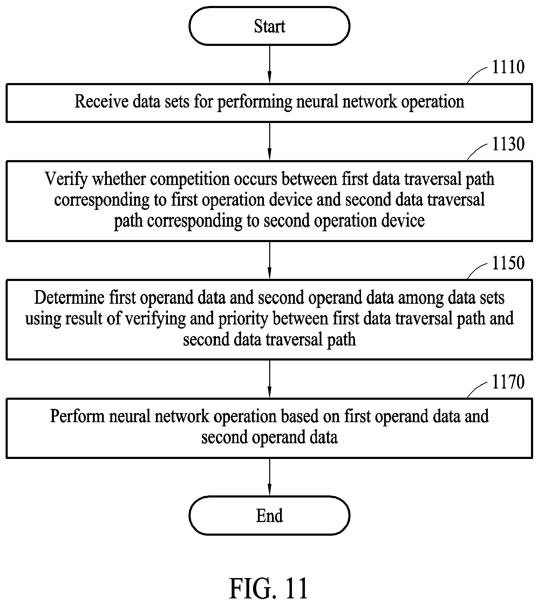

FIG. 11 illustrates an example of operation of the neural network operation apparatus of FIG. 1. The operations in FIG. 11 may be performed in the sequence and manner as shown, although the order of some operations may be changed or some of the operations omitted without departing from the scope of the illustrative examples described. Many of the operations shown in FIG. 11 may be performed in parallel or concurrently. One or more blocks of FIG. 11, and combinations of the blocks, can be implemented by special purpose hardware-based computer, such as a processor, that perform the specified functions, or combinations of special purpose hardware and computer instructions. In addition to the description of FIG. 11 below, the descriptions of FIGS. 1-10 are also applicable to FIG. 11, and are incorporated herein by reference. Thus, the above description may not be repeated here.

Referring to FIG. 11, in operation 1110, the receiver 100 may receive data for performing a neural network operation.

The processor 200 may determine whether to skip an operation for data on a first data traversal path and a second data traversal path among the data. The processor 200 may determine to skip the operation for the data in response to the data being "0", or determine to skip the operation for the data in response to the data being a value within a range.

In operation 1130, the processor may verify whether competition occurs between the first data traversal path corresponding to a first operation device and the second data traversal path corresponding to a second operation device. The processor 200 may verify that competition occurs between the first data traversal path and the second data traversal path when the first operation device and the second operation device approach the same data at a point in time.

In operation 1150, the processor 200 may determine first operand data and second operand data from among the data using a result of the verifying and a priority between the first data traversal path and the second data traversal path.

The processor 200 may set a priority for the first data traversal path and the second data traversal path. The processor 200 may set a first priority such that nodes corresponding to data on the first data traversal path have different priorities. The processor 200 may set a second priority such that nodes corresponding to data on the second data traversal path have different priorities.

When competition occurs, the processor 200 may determine the first operand data and the second operand data based on the priority. The processor 200 may determine a higher-priority traversal path by comparing a first priority corresponding to the first data traversal path with a second priority corresponding to the second data traversal path.

The processor 200 may determine data at a position at which the competition occurs to be operand data of an operation device corresponding to the higher-priority traversal path. When the first priority is higher than the second priority, the processor 200 may determine the data at the position at which the competition occurs to be the first operand data. The processor 200 may determine subsequent data on the second data traversal path to be the second operand data.

When the first priority being lower than the second priority, the processor 200 may determine the data at the position at which the competition occurs to be the second operand data. The processor 200 may determine subsequent data on the first data traversal path to be the first operand data.

The processor 200 may exclude addresses of the first operand data and the second operand data from the first data traversal path and the second data traversal path, in response to the first operand data and the second operand data being determined.

In operation 1170, the processor 200 may perform the neural network operation based on the first operand data and the second operand data.

The first data traversal path and the second data traversal path may have a predetermined traversal range. The processor 200 may update the first data traversal path and the second data traversal path for the data in response to a traversal in the predetermined traversal range being completed.

The neural network operation apparatus 10, data traversal manager 250, and a data processor 270, write manager, memory manager, and other apparatuses, devices, units, modules, and components described herein are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a controller and an arithmetic logic unit (ALU), a DSP, a microcomputer, an application-specific integrated circuit (ASIC), a field programmable gate array (FPGA), a programmable logic unit (PLU), a central processing unit (CPU), a graphics processing unit (GPU), a neural processing unit (NPU), or any other device capable of responding to and executing instructions in a defined manner.

The methods illustrated in FIGS. 1-13 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In an example, the instructions or software includes at least one of an applet, a dynamic link library (DLL), middleware, firmware, a device driver, an application program storing the method of operating a neural network operation. In another example, the instructions or software include higher-level code that is executed by the processor or computer using an interpreter. The instructions or software may be written using any programming language based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), magnetic RAM (MRAM), spin-transfer torque(STT)-MRAM, static random-access memory (SRAM), thyristor RAM (T-RAM), zero capacitor RAM (Z-RAM), twin transistor RAM (TTRAM), conductive bridging RAM(CBRAM), ferroelectric RAM (FeRAM), phase change RAM (PRAM), resistive RAM(RRAM), nanotube RRAM, polymer RAM (PoRAM), nano floating gate Memory(NFGM), holographic memory, molecular electronic memory device), insulator resistance change memory, dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In an example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined not by the detailed description, but by the claims, and all variations within the scope of the claims are to be construed as being included in the disclosure.

## Claims

1. A method of operating a neural network operation, the method comprising:
receiving data for the neural network operation;
verifying whether competition occurs between a first data traversal path corresponding to a first operation device and a second data traversal path corresponding to a second operation device;
determining first operand data and second operand data from among the data using a result of the verifying and a priority between the first data traversal path and the second data traversal path; and
performing the neural network operation based on the first operand data and the second operand data.

2. The method of claim 1, further comprising:
determining whether to skip an operation for data on the first data traversal path and the second data traversal path from among the data,
preferably, wherein the determining of whether to skip the operation comprises:
determining to skip the operation for the data in response to the data being "0"; or
determining to skip the operation for the data in response to the data being a value within a range.

3. The method of claim 1 or 2, wherein the verifying comprises verifying that competition occurs between the first data traversal path and the second data traversal path in response to the first operation device and the second operation device approaching a same data at a point in time.

4. The method of one of claims 1 to 3, wherein the determining of the first operand data and the second operand data comprises:
setting a priority for the first data traversal path and the second data traversal path; and
determining the first operand data and the second operand data based on the priority, in response to the occurrence of competition.

5. The method of claim 4, wherein the setting comprises:
setting a first priority such that nodes corresponding to data on the first data traversal path have different priorities; and
setting a second priority such that nodes corresponding to data on the second data traversal path have different priorities.

6. The method of claim 4, wherein the determining of the first operand data and the second operand data comprises:
comparing a first priority corresponding to the first data traversal path with a second priority corresponding to the second data traversal path to determine a higher-priority traversal path; and
determining data at a position at which the competition occurs to be operand data of an operation device corresponding to the higher-priority traversal path,
preferably, wherein the determining of the data at the position at which the competition occurs comprises:
determining the data at the position at which the competition occurs to be the first operand data, in response to the first priority being higher than the second priority; and
determining subsequent data on the second data traversal path to be the second operand data.

7. The method of one of claims 1 to 6, further comprising:
excluding addresses of the first operand data and the second operand data from the first data traversal path and the second data traversal path, in response to the first operand data and the second operand data being determined.

8. The method of one of claims 1 to 7, wherein the first data traversal path and the second data traversal path have a predetermined traversal range, and
the neural network operation method further comprises updating the first data traversal path and the second data traversal path, in response to completing a traversal in the predetermined traversal range.

9. A neural network operation apparatus, comprising:
a receiver configured to receive data for a neural network operation; and
a processor configured to verify whether competition occurs between a first data traversal path corresponding to a first operation device and a second data traversal path corresponding to a second operation device, to determine first operand data and second operand data from among the data using a result of the verifying and a priority between the first data traversal path and the second data traversal path, and to perform the neural network operation based on the first operand data and the second operand data.

10. The neural network operation apparatus of claim 9, wherein the processor is further configured to determine whether to skip an operation for data on the first data traversal path and the second data traversal path from among the data,
preferably, wherein the processor is further configured to determine to skip the operation for the data in response to the data being "0", or to determine to skip the operation for the data in response to the data being a value within a range.

11. The neural network operation apparatus of claim 9 or 10, wherein the processor is further configured to verify that competition occurs between the first data traversal path and the second data traversal path, in response to the first operation device and the second operation device approaching a same data at a point in time.

12. The neural network operation apparatus of one of claims 9 to 11, wherein the processor is further configured to set a priority for the first data traversal path and the second data traversal path, and to determine the first operand data and the second operand data based on the priority in response to the occurrence of competition.

13. The neural network operation apparatus of claim 12, wherein the processor is further configured to set a first priority such that nodes corresponding to data on the first data traversal path have different priorities, and set a second priority such that nodes corresponding to data on the second data traversal path have different priorities.

14. The neural network operation apparatus of claim 12, wherein the processor is further configured to compare a first priority corresponding to the first data traversal path with a second priority corresponding to the second data traversal path to determine a higher-priority traversal path, and to determine data at a position at which the competition occurs to be operand data of an operation device corresponding to the higher-priority traversal path,
preferably,
wherein the processor is further configured to determine the data at the position at which the competition occurs to be the first operand data, in response to the first priority being higher than the second priority, and to determine subsequent data on the second data traversal path to be the second operand data.

15. The neural network operation apparatus of one of claims 9 to 14, wherein the processor is further configured to exclude addresses of the first operand data and the second operand data from the first data traversal path and the second data traversal path, in response to the first operand data and the second operand data being determined;
and/or
wherein the first data traversal path and the second data traversal path have a predetermined traversal range, and
the processor is further configured to update the first data traversal path and the second data traversal path, in response to completing a traversal in the predetermined traversal range.
